# EUROPÄISCHE PATENTSCHRIFT

(11) **EP 0 984 248 B1**
(45) Veröffentlichungstag und Bekanntmachung des Hinweises auf die Patenterteilung: **09.06.2004**
(21) Anmeldenummer: 98116545.9
(22) Anmeldetag: 02.09.1998
(51) Int. Cl.: G01D 11/24, G01F 23/296

(54) **Messaufnehmer**
Measurement detector
Capteur de mesure

(43) Veröffentlichungstag der Anmeldung: 08.03.2000
(60) Teilanmeldung: 04008268.7
(73) Patentinhaber: Endress + Hauser GmbH + Co.KG., 79689 Maulburg (DE)
(72) Erfinder: Dreyer, Volker, D-79541 Lörrach (DE); Kuhny, Jutta, D-79588 Efringen-Kirchen (DE)
(74) Vertreter: Andres, Angelika

(56) Entgegenhaltungen:
- EP-A- 0 766 073
- DE-A- 4 418 569
- PATENT ABSTRACTS OF JAPAN vol. 15, no. 58 (E-1032), 12. Februar 1991 & JP 02 285699 A (TOSHIBA CORP), 22. November 1990

## Beschreibung

Die Erfindung betrifft einen Meßaufnehmer mit einem Sensorraum, in dem ein Sensor angeordnet ist, und mit einem Elektronikraum, in dem ein eine Elektronik enthaltender Einsatz angeordnet ist.

Meßaufnehmer bilden die Basis der industriellen Meß- und Regeltechnik. So werden z.B. in nahezu allen Anlagen der Großindustrie, z.B. in der Chemie, in der Lebensmittelindustrie oder in Wasseraufbereitungsanlagen, Meßaufnehmer eingesetzt, um Prozeßgrößen, wie z.B. Druck, Temperatur, Füllstand, Durchfluß oder andere Meßgrößen, vor Ort zu messen und/oder zu überwachen. Die Meßaufnehmer sind an einem Meßort angeordnet und enthalten einen Sensor, der die gewünschte Prozeßgröße erfaßt und in eine elektrische Größe umwandelt. Die elektrische Größe wird einer Elektronik zugeführt, die diese weiterverarbeitet und in ein elektrisches Ausgangssignal umwandelt, das eine Anzeige und/oder eine Weiterleitung des Meßergebnisses ermöglicht.

Der Elektronikraum muß eine verschließbare Öffnung aufweisen, durch die der Einsatz in den Elektronikraum eingeführt werden kann. Zusätzlich ist die Elektronik an den Sensor anzuschließen (siehe z.B. EP-A-0 766 073). Hierzu ist ein Durchgang vorzusehen, der eine Verbindung zwischen dem Sensorraum und dem Elektronikraum herstellt und durch den hindurch der elektrische Anschluß des Sensors an die Elektronik erfolgt.

Im Inneren des Meßaufnehmers besteht somit ein durchgehender Hohlraum. Da Meßaufnehmer regelmäßig wechselnden Umgebungsbedingungen, vor allem Temperaturschwankungen, ausgesetzt sind, besteht somit die Gefahr, daß Feuchtigkeit eindringt, die die Funktion des Sensors und/oder der Elektronik stark beeinträchtigen kann.

Feuchtigkeit dringt zum Beispiel dann ein, wenn warme Luft, mit hoher Luftfeuchtigkeit in den Sensorraum und/oder den Elektronikraum eindringt und dort abkühlt. Beim Abkühlen kondensiert die in der Luft enthaltene Feuchtigkeit und das angesammelte Wasser kann anschließend nicht mehr oder nur sehr langsam aus dem Inneren des Meßaufnehmers entweichen.

Desweiteren kann Feuchtigkeit eindringen, wenn z.B. ein Temperaturgradient zwischen dem Inneren des Meßaufnehmers und dessen Umgebung besteht und der Taupunkt im Inneren des Meßaufnehmers unterschritten wird. Auch in diesem Fall bildet sich Kondensat im Inneren des Meßaufnehmers, und das so entstehende Wasser kann anschließend nicht mehr oder nur sehr langsam aus dem Inneren des Meßaufnehmers entweichen.

Es ist eine Aufgabe der Erfindung, einen Meßaufnehmer anzugeben, bei dem der Sensor dauerhaft vor Feuchtigkeit geschützt ist.

Hierzu besteht die Erfindung in einem Meßaufnehmer
- mit einem Sensorraum,
- in dem ein Sensor angeordnet ist, und
- mit einem Elektronikraum,
   -- in dem ein eine Elektronik enthaltender Einsatz angeordnet ist,
- wobei zwischen dem Sensorraum und dem Elektronikraum ein Durchgang besteht, durch den der Elektronikraum mit dem Sensorraum verbunden ist, und
- wobei ein Anschlußelement zum elektrischen Anschluß des Sensors an die Elektronik vorgesehen ist,
   -- das integraler Bestandteil des Einsatzes ist,
   -- das sich in den Durchgang hinein erstreckt und
   -- das den Durchgang verschließt.

Gemäß einer bevorzugten Ausführungsform sind die freien Hohlräume im Inneren des Einsatzes und des in den Einsatz integrierten Anschlußelements mit einer Vergußmasse ausgefüllt.

Gemäß einer weiteren bevorzugten Ausführungsform ist zwischen dem Durchgang und dem Anschlußelement eine Dichtung vorgesehen.

Gemäß einer weiteren bevorzugten Ausführungsform ist in einer Außenwand des Elektronikraums ein Luftfilter angeordnet.

Gemäß einer weiteren bevorzugten Ausführungsform ist der Elektronikraum mit einem lösbaren Deckel verschlossen.

Dieser Meßaufnehmer bietet den Vorteil, daß der Innenraum trotz des notwendigen Durchgangs zwischen dem Sensorraum und dem Elektronikraum in zwei getrennte Abschnitte aufgeteilt ist. Damit ist das Volumen des Hohlraums, das bei Temperaturwechseln als Luft einsaugendes Pumpvolumen wirken kann, praktisch auf das in dem Elektronikraum verbleibende freie Volumen beschränkt. Feuchtigkeit kann von außen, wenn überhaupt, dann nur in den Elektronikraum eindringen. Der Sensorraum ist verschlossen, und ein Luftaustausch zwischen Sensorraum und Elektronikraum findet praktisch nicht statt.

Ein weiterer Vorteil dieses Meßaufnehmers besteht darin, daß er modular aufgebaut ist. Elektronik und Sensor sind separate Bausteine, die unabhängig voneinander eingesetzt werden können und lediglich durch das Anschlußelement miteinander zu verbinden sind. Damit kann der Meßaufnehmer mit geringem Aufwand gefertigt werden und bietet ein hohes Maß an Flexibilität. Es kann z.B. ein Baukasten aus verschiedenen Elektroniken und verschiedenen Sensortypen vorgesehen werden, die beliebig miteinander kombinierbar sind.

Die Erfindung und weitere Vorteile werden nun anhand der Figur der Zeichnung, in der ein Ausführungsbeispiel dargestellt ist, näher erläutert.

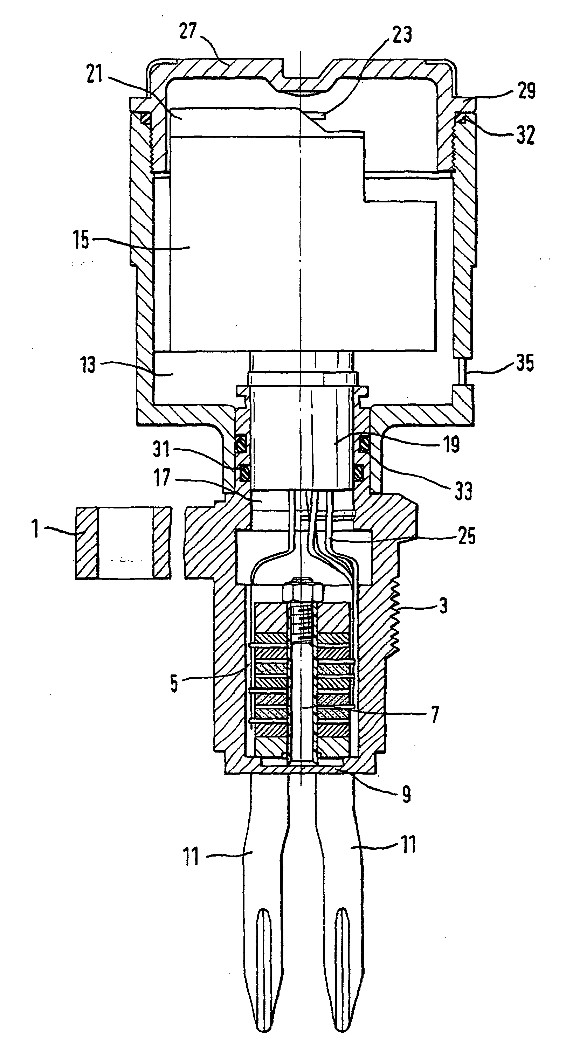

Fig. 1 zeigt einen Schnitt durch einen Meßaufnehmer.

In Fig. 1 ist ein erfindungsgemäßer Meßaufnehmer dargestellt. Der Meßaufnehmer ist an einem Meßort zu befestigen. Hierzu weist der Meßaufnehmer, z.B. wie auf der linken Seite von Fig. 1 dargestellt, einen daran angeformten Flansch 1 auf, mit dem der Meßaufnehmer auf einen entsprechenden Gegenflansch montierbar ist. Genausogut kann der Meßaufnehmer, wie auf der rechten Seite von Fig. 1 dargestellt, ein Außengewinde 3 aufweisen mittels dessen er in eine Öffnung, z.B. in einen Tank oder einen Behälter, einschraubbar ist.

Der Meßaufnehmer weist einen Sensorraum 5 auf, indem ein Sensor 7 angeordnet ist. Der Sensor 7 kann z.B. ein Drucksensor, ein Temperatursensor, eine kapazitive Füllstandssonde, ein Ultraschallsensor oder ein Mikrowellen sendendes und empfangendes Mikrowellenmodul oder ein Durchflußmesser sein.

Bei dem gezeigten Ausführungsbeispiel umfaßt der Sensor 7 einen elektromechanischen Wandler eines Füllstandsgrenzschalters. Der Sensorraum 5 ist von einem topfförmigen Gehäuse abgeschlossen. Der Boden des topfförmigen Gehäuses bildet eine Membran 9, an deren nach außen weisenden Seite zwei voneinander beabstandet angeordnete Schwingstäbe 11 endseitig befestigt sind. Die Membran 9 wird durch den elektromechanischen Wandler in Schwingungen versetzt. Aufgrund der Membranschwingung führen die Schwingstäbe 11 Schwingungen senkrecht zu deren Längsachse aus.

Der elektromechanische Wandler ist in dem gezeigten Ausführungsbeispiel ein Stapel von piezoelektrischen Elementen, von denen mindestens eines als Sender arbeitet und die Membran in Schwingungen versetzt und mindestens eines als Empfänger arbeitet und die Schwingungen der Membran aufnimmt.

Der Meßaufnehmer ist an einem Behälter so zu befestigen, daß die Schwingstäbe 11 auf der Höhe eines vorbestimmten Füllstandes, dessen Erreichen festgestellt und/oder überwacht werden soll, in den Behälter hineinragen. Die Schwingungseigenschaften des Schwingungsgebildes hängen davon ab, ob die Schwingstäbe von einem in dem Behälter befindlichen Füllgut bedeckt sind oder ob sie frei schwingen. Es kann z.B. Frequenz, Amplitude oder Dauer des Ausschwingens des Schwingungsgebildes im Anschluß an eine kurzzeitige Schwingungsanregung gemessen und ausgewertet werden. Genauso ist es auch möglich, das Schwingungsgebilde permanent zu Schwingungen, z.B. bei dessen Resonanzfrequenz, anzuregen und Amplitude und/oder Frequenz dieser Schwingung aufzunehmen und auszuwerten.

Neben dem Sensorraum 5 weist der Meßaufnehmer weiter einen Elektronikraum 13 auf. In diesem ist ein Einsatz 15 angeordnet, in dem sich eine in Fig. 1 nicht dargestellte Elektronik befindet.

Zwischen dem Sensorraum 5 und dem Elektronikraum 13 besteht ein Durchgang 17, durch den der Elektronikraum 13 mit dem Sensorraum 5 verbunden ist.

Es ist ein Anschlußelement 19 zum elektrischen Anschluß des Sensors 7 an die Elektronik vorgesehen. Das Anschlußelement 19 ist integraler Bestandteil des Einsatzes 15. Es erstreckt sich in den Durchgang 17 hinein und verschließt den Durchgang 17. Hierzu weist das sensor-zugewandte Ende des Anschlußelements 19 eine Außengeometrie auf, die gleich einer Innengeometrie des Durchgangs 17 ist. Damit ist der Durchgang 17 verschlossen und der Sensorraum 5 und der Elektronikraum 13 sind voneinander getrennt. Vorzugsweise ist zwischen dem Durchgang 17 und dem Anschlußelement 19 eine Dichtung 31 vorgesehen.

Für den in Fig. 1 dargestellten Fall, daß der Sensorraum 5 und der Elektronikraum 13 von zwei getrennten Gehäusen begrenzt sind, ist vorzugsweise auch dort, wo die beiden Gehäuse aneinandergrenzen, bzw. wie in Fig. l dargestellt, überlappen, ebenfalls eine Dichtung 33 vorzusehen. In Fig. 1 weisen die beiden Gehäuse jeweils einen zylindrischen Abschnitt auf und die beiden zylindrischen Abschnitte umgreifen einander koaxial. Der innere zylindrische Abschnitt weist eine ringförmig umlaufende Nut auf, in der die Dichtung 33 angeordnet ist.

Einsatz 15 und Anschlußelement 19 sind vorzugsweise ein einteiliges Kunststoffgehäuse. Der Einsatz 15 weist an dessen anschlußelement-abgewandter Seite eine Öffnung auf, durch die die Elektronik einbringbar ist. Die Elektronik ist vorzugsweise eine auf einer oder mehreren Leiterplatten montierte elektronische Schaltung und die Leiterplatten sind in Steckplätze im Inneren des Einsatzes 15 einsteckbar. An den Steckplätzen sind elektrische Kontaktelemente vorgesehen, die beim Einstecken der Leiterplatten einen elektrischen Kontakt herstellen.

Auf der sensor-zugewandten Seite des Anschlußelements 19 sind Anschlüsse vorgesehen, an die der Sensor 7 anschließbar ist. Diese Anschlüsse sind z.B. Klemmstecker, in die Anschlußleitungen 25 des Sensors 7 einsteckbar sind. In dem gezeigten Ausführungsbeispiel sind die Anschlußleitungen 25 Leitungen, die direkt mit den Elektroden der piezoelektrischen Elemente verbunden sind. Die Anschlüsse sind im Inneren des Anschlußelements 19 ebenfalls jeweils mit einem Kontaktelement verbunden und darüber an die elektrische Schaltung angeschlossen.

Die Öffnung des Einsatzes 15 ist durch einen vorzugsweise aufrastbaren Deckel 21 verschlossen. Auf dem Deckel 21 sind Anschlußklemmen 23 vorgesehen, von denen jede elektrisch leitend mit einem Kontaktelement und somit mit einer der Leiterplatten verbunden ist. Über diese Anschlußklemmen 23 kann der Meßaufnehmer mit Energie versorgt werden und das Ausgangssignal des Meßaufnehmers kann abgenommen werden.

vorzugsweise sind verbleibende freie Hohlräume im Inneren des Einsatzes 15 und des in den Einsatz 15 integrierten Anschlußelements 19 mit einer Vergußmasse, z.B. einem Silikongel, ausgefüllt.

Der Elektronikraum 13 weist eine Öffnung auf, durch die hindurch der Einsatz 15 mit dem integrierten Anschlußelement 19 bei der Montage einzuführen ist. Die Öffnung ist mit einem lösbaren Deckel 27 verschlossen. Dieser weist ein Außengewinde auf und ist in die Öffnung eingeschraubt. Weiter weist der Deckel 27 eine sich radial nach außen erstreckende Schulter 29 auf, die im montierten Zustand auf einer die Öffnung begrenzenden Ringfläche aufliegt. In der Ringfläche ist eine Nut zur Aufnahme einer Dichtung 31, in dem gezeigten Ausführungsbeispiel ist dies ein O-Ring aus einem Elastomer, angeordnet. Die Öffnung ist somit zum einen durch das Außengewinde und zum anderen durch die Dichtung 32 abgedichtet.

Bei geöffnetem Deckel 27 sind die Anschlußklemmen 23 zugänglich. Üblicherweise ist eine in Fig. 1 nicht dargestellte hermetisch dichte Durchführung vorgesehen, durch die hindurch von außen Leitungen in den Elektronikraum 5 eingeführt sind, die dann an die Anschlußklemmen 23 anzuschließen sind.

Durch den zuvor beschriebenen Aufbau ist erreicht, daß der Sensorraum 5 von dem Elektronikraum 13 getrennt ist und mit der Dichtung 31 sogar hermetisch dicht abgeschlossen ist.

Der Sensor 7 ist somit vollständig vor Feuchtigkeit geschützt.

Es kann jedoch aufgrund der erforderlichen Öffnungen des Elektronikraums 13 nicht vollständig ausgeschlossen werden, daß Feuchtigkeit in diesen eindringt. Zwar ist die Elektronik durch den sie umgebenden Einsatz 15 und ggf. durch die Vergußmasse geschützt, es empfiehlt sich jedoch trotzdem, die Menge der eindringenden Feuchtigkeit möglichst gering zu halten. Hierzu ist vorzugsweise in einer Außenwand des Elektronikraumes 13 ein wasserdichter und Wasserdampf zurückhaltender Luftfilter 35 vorgesehen, durch den hindurch Luft ausgetauscht wird. Hierdurch wird das Entstehen von Temperaturgradienten zwischen dem Inneren des Elektronikraums 13 und der Umgebung deutlich reduziert und in von außen eindringender Luft enthaltene Feuchtigkeit wird zumindest teilweise zurückgehalten.

Zusätzlich wird durch den Luftfilter 35 ein Druckausgleich erreicht, wodurch verhindert wird, daß die Dichtung 32 am Deckel 27 des Elektronikraumes 13 belastet wird.

## Patentansprüche

1. Meßaufnehmer
- mit einem Sensorraum (5),
-- in dem ein Sensor (7) angeordnet ist, und
- mit einem Elektronikraum (13),
-- in dem ein eine Elektronik enthaltender Einsatz (15) angeordnet ist,
- wobei zwischen dem Sensorraum (5) und dem Elektronikraum (13) ein Durchgang (17) besteht, durch den der Elektronikraum (13) mit dem Sensorraum (5) verbunden ist, und
- wobei ein Anschlußelement (19) zum elektrischen Anschluß des Sensors (7) an die Elektronik vorgesehen ist,
-- das integraler Bestandteil des Einsatzes (15) ist,
-- das sich in den Durchgang (17) hinein erstreckt und
-- das den Durchgang (17) verschließt.

2. Meßaufnehmer nach Anspruch 1, bei dem freie Hohlräume im Inneren des Einsatzes (15) und des in den Einsatz (15) integrierten Anschlußelements (19) mit einer Vergußmasse ausgefüllt sind.

3. Meßaufnehmer nach Anspruch 1, bei dem zwischen dem Durchgang (17) und dem Anschlußelement (19) eine Dichtung (31) vorgesehen ist.

4. Meßaufnehmer nach Anspruch 1, bei dem in dem in einer Außenwand des Elektronikraums (13) ein Luftfilter (35) angeordnet ist.

5. Meßaufnehmer nach Anspruch 1, bei dem der Elektronikraum (13) mit einem lösbaren Deckel (27) verschlossen ist.

6. Meßaufriehmer nach einem der vorherigen Ansprüche, bei dem das Anschlusselement lösbar mit dem Sensor verbunden ist.

7. Meßaufnehmer nach einem der vorherigen Ansprüche, bei dem das Anschlusselement mittels Klemmsteckern mit dem Sensor elektrisch verbunden ist.

8. Meßaufnehmer nach einem der vorherigen Ansprüche, bei dem der Sensorraum und der Elektronikraum jeweils in einem separaten Gehäuse angeordnet sind.

9. Meßaufnehmer nach einem der vorherigen Ansprüche, wobei der Meßaufnehmer modular aufgebaut ist, und wobei der Meßaufnehmer ein separates Sensor-Modul, in dem der Sensorraum (5) angeordnet ist, und ein separates Elektronik-Modul, in dem der Elektronikraum (13) angeordnet ist, umfaßt.

10. Meßaufnehmer nach einem der vorherigen Ansprüche, bei dem der Sensor als ein Drucksensor, ein Temperatursensor, eine kapazitive Füllstandssonde, ein Ultraschallsensor, ein Mikrowellen sendendes und empfangendes Mikrowellenmodul oder ein Durchflussmesser ausgebildet ist.

## Claims

1. A measuring gauge
- comprising a sensor chamber (5)
-- in which a sensor (7) is arranged, and
- comprising an electronic device chamber (13)
-- in which an insert (15) containing an electronic device is arranged,
- wherein, between the sensor chamber (5) and the electronic device chamber (13), a passage (17) is provided, by means of which the electronic device chamber (13) is connected to the sensor chamber (5), and
- wherein a connecting element (19) for electrically connecting the sensor (7) to the electronic device is provided,
-- which connecting element (19) is an integral part of the insert (15),
-- extends into the passage (17) and
-- closes off the passage (17).

2. A measuring gauge according to claim 1, wherein free spaces inside the insert (15) and inside the connecting element (19) integrated into the insert (15) are filled with a sealing compound.

3. A measuring gauge according to claim 1, wherein a seal (31) is provided between the passage (17) and the connecting element (19).

4. A measuring gauge according to claim 1, wherein an air filter (35) is arranged in an outer wall of the electronic device chamber (13).

5. A measuring gauge according to claim 1, wherein the electronic device chamber (13) is closed by a detachable cover (27).

6. A measuring gauge according to any one of the preceding claims, wherein the connecting element is detachably connected to the sensor.

7. A measuring gauge according to any one of the preceding claims, wherein the connecting element is electrically connected to the sensor by means of clamping plugs.

8. A measuring gauge according to any one of the preceding claims, wherein the sensor chamber and the electronic device chamber are each arranged in a separate housing.

9. A measuring gauge according to any one of the preceding claims, wherein the measuring gauge is of modular construction and wherein the measuring gauge comprises a separate sensor module, in which the sensor chamber (5) is arranged, and a separate electronic device module, in which the electronic device chamber (13) is arranged.

10. A measuring gauge according to any one of the preceding claims, wherein the sensor is formed as a pressure sensor, a temperature sensor, a capacitive level probe, an ultrasonic sensor, a microwave module sending and receiving microwaves, or a flow meter.

## Revendications

1. Un capteur
- avec une chambre de capteurs (5),
- dans lequel est disposé un capteur (7) et
- avec une chambre pour l'électronique (13),
- dans laquelle on a disposé un insert (15) comprenant l'électronique,
- un passage (17) existant entre la chambre de capteurs (5) et la chambre pour l'électronique (13), grâce auquel la chambre pour l'électronique (13) est reliée à la chambre de captation (5), et
- un élément de raccordement (19) étant prévu pour raccorder de façon électrique le capteur (7) à l'électronique,
- lequel élément de raccordement est une partie intégrale de l'insert (15),
- qui s'étend à l'intérieur du passage (17) et
- qui ferme le passage (17).

2. Un capteur selon la revendication 1, dans lequel des chambres creuses situées à l'intérieur de l'insert (15) et de l'élément de raccordement (19) intégré dans l'insert sont remplies d'une masse de scellement.

3. Un capteur selon la revendication 1, pour lequel on a prévu un joint ( 31) entre le passage (17) et l'élément de raccordement (19).

4. Un capteur selon la revendication 1, pour lequel on a disposé un filtre à air (35) dans une paroi extérieure de la chambre pour l'électronique (13).

5. Un capteur selon la revendication 1, pour lequel la chambre pour l'électronique (13) est fermée par un couvercle (27) mobile.

6. Un capteur selon une des revendications précédentes, pour lequel l'élément de raccordement est relié avec l'élément de raccordement de façon à pourvoir être retiré.

7. Un capteur selon une des revendications précédentes, pour lequel l'élément de raccordement est relié au capteur de façon électrique au moyen de fiches verrouillables.

8. Un capteur selon une des revendications précédentes, pour lequel la chambre de captage et la chambre pour l'électronique sont disposées à chaque fois dans un boîtier séparé.

9. Un capteur selon une des revendications précédentes, où le capteur est construit de façon modulaire et où le capteur comprend un module capteur séparé dans lequel la chambre de capteur (5) est disposée, et un module électronique séparé dans lequel on a disposé la chambre pour l'électronique (13).

10. Un capteur selon une des revendications précédentes, pour lequel le capteur est formé en tant que capteur de pression, de capteur de température, sonde capacitive du niveau de remplissage, un capteur à ultrasons, un module à micro-ondes envoyant et recevant des micro-ondes ou en tant que débitmètre.
